# EUROPEAN PATENT APPLICATION

(11) **EP 4 429 089 A1**
(43) Date of publication of application: **11.09.2024**
(21) Application number: 22890347.2
(22) Date of filing: 02.11.2022
(51) Int. Cl.: H02K 21/22, H02K 1/2786, H02K 7/00, H02K 11/215, H02K 11/01, G01D 5/14, B60K 7/00

(54) **IN-WHEEL MOTOR**

(30) Priority: 04.11.2021 KR 20210150346
(71) Applicant: LG Electronics Inc., Yeongdeungpo-gu Seoul 07336 (KR)
(72) Inventor: KIM, Hyungbum, Seoul 08592 (KR); KIM, Dosun, Seoul 08592 (KR); PARK, Young Il, Seoul 08592 (KR); KIM, Yeongjae, Seoul 08592 (KR)
(74) Representative: Vossius & Partner Patentanwälte Rechtsanwälte mbB
(86) International application number: PCT/KR2022/016979
(87) International publication number: WO 2023/080616

(57) **Abstract**

The present invention relates to an in-wheel motor comprising: a motor assembly including a rim, a cover, a shaft, a stator, and a rotor; a magnetic type encoder including a ring-shaped magnet rotating together with the cover, and an encoder sensor for sensing a magnetic flux of the ring-shaped magnet; and a shielding unit coupled to the cover.

## Description

### FIELD

Embodiments of the present disclosure relate to an in-wheel motor, and more specifically, relate to an in-wheel motor that may improve a performance of a magnetic encoder used to control the in-wheel motor by sensing the number of rotations and a speed of the in-wheel motor.

### DESCRIPTION OF RELATED ART

Content to be described below is merely for a purpose of providing background information related to an embodiment of the present disclosure, and the content described does not necessarily constitute prior art.

An in-wheel motor is used not only in various means of travel that use electricity as a power source, but also in means of travel of an autonomous robot or the like.

The in-wheel motor outputs power from a motor assembly located inside a rim.

The motor assembly includes a stator and a rotor, and the power output from such motor assembly is transmitted to the rim and wheels without going through a separate power transmitting apparatus to provide a rotational force necessary for travel.

As such, unlike existing general means of travel, the in-wheel motor does not require a complicated driving apparatus or the power transmitting apparatus, and thus, has a simple structure and enables lightening of the means of travel. Furthermore, the in-wheel motor reduces energy loss that occurs during power transmission compared to the existing general means of travel.

A general in-wheel motor includes a tire, the circular rim that is coupled with the tire and rotates the tire, the motor assembly that provides the rotational force to the rim, and a shaft that is fixed to a center of the motor assembly.

The tire is removably coupled to the circular rim.

The motor assembly includes the stator and the rotor, and is disposed inside the rim and receives the power to generate the rotational force.

Generally, the shaft extends through a center of the stator and is coupled to the stator. The stator receives the power from the outside of the in-wheel motor via a power supply line, and when the power is supplied to the stator, the rotor rotates around the stator.

The power supply line may have a structure that is inserted via a hollow of the shaft and connected to one side of the stator.

In one example, the rotor is connected to the rim. For this reason, when the rotor rotates around the stator, the rim rotates with the rotor. Further, the tire rotates with the rim. This may enable an operation of the in-wheel motor.

In one example, an encoder is used as an apparatus to sense the number of rotations and a speed of the in-wheel motor.

The encoder is a type of sensor. The encoder is installed on the in-wheel motor and is used to control the in-wheel motor by sensing the number of rotations and the speed of the in-wheel motor.

Types of encoders include an optical encoder, a magnetic encoder, and the like.

The in-wheel motor mainly used outdoors uses the magnetic encoder with excellent environmental reliability.

Generally, the magnetic encoder includes a magnet and an encoder sensor that senses a change in a magnetic flux when the magnet rotates and outputs an A/B/Z signal.

However, to ensure accuracy of such magnetic encoder, a magnetic shielding structure is required so as not to be affected by an external stray field, other than the magnetic flux caused by the magnet.

Additionally, there is a range of magnetic flux density that the encoder sensor may recognize depending on a temperature. For this reason, care is needed in designing a distance between the encoder sensor and the magnet.

As a prior document related to the present disclosure, CN210608838U (hereinafter, referred to as Prior Document 1) discloses a magnetic sensor outer rotor motor.

The outer rotor motor disclosed in Prior Document 1 includes a magnetic sensor and a magnet. The magnet is disposed facing the magnetic sensor and has a disk shape. The disk-shaped magnet is fixed to the inside of a cover. An anti-interference steel plate is disposed on the outside of the cover and shields an external magnetic field to prevent external magnetic field disturbance.

However, the outer rotor motor disclosed in Prior Document 1 has following problems.

First, as the anti-interference steel plate is disposed in an axial direction of the disk-shaped magnet, external magnetic field shielding occurs only in the axial direction of the disk-shaped magnet. In other words, there is a disadvantage that the magnetic field shielding is only achieved in the axial direction of the disk-shaped magnet, but not in a radial direction thereof.

Second, a distance between the disk-shaped magnet and the encoder sensor is fixed. This structure has a disadvantage in that when a performance of the disk-shaped magnet deteriorates resulted from demagnetization, the encoder sensor may not accurately sense rotation of the magnet.

Third, as the disk-shaped magnet is fixed to the inside of the cover, there is a disadvantage that complex work processes such as tire removal and cover removal are required to replace the magnet when the performance thereof deteriorates.

As another prior document related to the present disclosure, a rotary sensor assembly is disclosed in Korean Utility Model Application Publication No. 20-2013-0002174 (hereinafter, referred to as Prior Document 2).

A sensor structure disclosed in Prior Document 2 proposes a spacing adjusting means that adjusts a spacing between a magnet and an encoder IC (i.e., a sensor).

The sensor structure in Prior Document 2 will be described. A magnet receiving groove is defined in a rotatable body, and the magnet and a spring are inserted into the magnet receiving groove. The spring presses the magnet inserted into the magnet receiving groove outward, so that the magnet protrudes toward the encoder sensor. In one example, the spacing adjusting means adjusts a protruding degree of the magnet and adjusts the spacing between the magnet and the encoder sensor. Such spacing adjusting means includes a spacing adjusting plate and an adjusting screw.

However, in the sensor structure disclosed in Prior Document 2, the spacing adjusting means is disposed inside the rotatable body, more specifically, in an internal area of the rotatable body facing the sensor, so that there is an inconvenience during work that an entirety of the rotatable body must be disassembled to adjust the spacing (i.e., a distance) between the magnet and the encoder sensor. In addition, replacing the magnet with a new one also requires a complicated work process that requires disassembling an entirety of the rotatable body, then unfastening an adjusting screw, and then separating the spacing adjusting plate.

In addition, the sensor structure of Prior Document 2 is weak in shielding the external magnetic fields in both the axial direction of the magnet as well as the radial direction, which has a fatal disadvantage in that encoder measurement accuracy may be reduced.

As another prior document related to the present disclosure, Korean Patent No. 10-1928877 (hereinafter, referred to as Prior Document 3) discloses a speed measuring device for a vehicle equipped with an in-wheel motor.

Prior Document 3 includes a transmission gear that rotates by receiving power of the in-wheel motor, a measurement subject having a magnetic force and mounted on the transmission gear, and a speed sensor that measures rotation of the measurement subject. The measurement subject includes a bracket coupled to the transmission gear and a magnet fixed to the bracket.

As such, Prior Document 3 uses the magnet and the sensor to measure a speed of the in-wheel motor, more specifically, the vehicle equipped with the in-wheel motor.

However, Prior Document 3 has a disadvantage of not suggesting any structure that may shield the external magnetic field, other than the magnetic flux caused by the magnet.

### DISCLOSURE

### TECHNICAL PURPOSE

The present disclosure is to provide an in-wheel motor that may improve a performance of a magnetic encoder used to control the in-wheel motor by sensing the number of rotations and a speed of the in-wheel motor.

The present disclosure is to provide an in-wheel motor that makes it easy to replace a magnet with a new one when a performance of the magnet deteriorates because of demagnetization as the replacement of the magnet becomes simpler by improving a shape of a shielding plate.

The present disclosure is to provide an in-wheel motor that may improve an axial external magnetic field shielding performance of a magnet as well as a radial external magnetic field shielding performance thereof by compensating for radial external magnetic field vulnerability of an existing disk-shaped magnet using a ring-shaped magnet.

The present disclosure is to provide an in-wheel motor that may prevent accuracy of an encoder from being reduced because of inability to adjust a distance between an existing disk-shaped magnet and an encoder sensor because adjustment of a distance between the magnet and the encoder sensor is not required as long as a ring-shaped magnet is used and the encoder sensor is located in a hollow of the ring-shaped magnet.

Purposes of the present disclosure are not limited to the purposes mentioned above, and other purposes and advantages of the present disclosure not mentioned may be understood by the description below and may be understood more clearly by embodiments of the present disclosure. In addition, it will be easy to recognize that the purposes and the advantages of the present disclosure may be realized by the means indicated in the patent claims and combinations thereof.

### TECHNICAL SOLUTION

According to one aspect of the present disclosure, an in-wheel motor that may improve a performance of a magnetic encoder used to control the in-wheel motor by sensing the number of rotations and a speed of the in-wheel motor may be provided.

According to another aspect of the present disclosure, an in-wheel motor that makes it easy to replace a magnet with a new one when a performance of the magnet deteriorates because of demagnetization as the replacement of the magnet becomes simpler by improving a shape of a shielding plate may be provided.

According to still another aspect of the present disclosure, an in-wheel motor that may improve an axial external magnetic field shielding performance of a magnet as well as a radial external magnetic field shielding performance thereof by compensating for radial external magnetic field vulnerability of an existing disk-shaped magnet using a ring-shaped magnet may be provided.

According to yet another aspect of the present disclosure, an in-wheel motor that may prevent accuracy of an encoder from being reduced because of inability to adjust a distance between an existing disk-shaped magnet and an encoder sensor because adjustment of a distance between the magnet and the encoder sensor is not required as long as a ring-shaped magnet is used and the encoder sensor is located in a hollow of the ring-shaped magnet may be provided.

An in-wheel motor according to an embodiment of the present disclosure includes a rim, a cover, a shaft, a motor assembly, a magnetic encoder, and a shielding portion.

The rim refers to a circular rigid member that is open at both sides. A tire and the like may be coupled in an outer circumferential direction of the rim.

The cover may be coupled to the rim to cover open areas at the both sides of the rim.

The cover may seal the interior of the rim. The cover serves to protect various electronic components, including the motor assembly disposed inside the rim.

The shaft may be disposed arranged in an axial direction at a center of the rim.

The motor assembly includes a stator surrounding and fixed to the shaft, and a rotor disposed to surround the stator and rotatable about the shaft.

The motor assembly may be disposed inside the rim to provide a rotational force to the rim.

The magnetic encoder is an apparatus that senses the number of rotations and a speed of the in-wheel motor.

The magnetic encoder includes a ring-shaped magnet and an encoder sensor.

The ring-shaped magnet refers to a ring-shaped magnet with a circular hollow defined therein.

The ring-shaped magnet may rotate together with the cover.

The encoder sensor refers to a sensor that is located between the shaft and the cover and connected and fixed to the shaft in the axial direction, and senses a change in a magnetic flux of the ring-shaped magnet.

The encoder sensor may output an A/B/Z phase signal by sensing the change in the magnetic flux of the ring-shaped magnet that rotates with the rim and the cover.

The shielding portion may be detachably coupled to the cover. For example, a screw hole may be defined in the cover, and the shielding portion may be fastened to or released from the screw hole.

The shielding portion may serve to shield an external magnetic field other than the ring-shaped magnet.

The shielding portion may improve accuracy of the encoder sensor by preventing the encoder sensor from being affected by an external stray field other than the ring-shaped magnet, that is, the magnetic flux caused by the magnet.

In the in-wheel motor according to an embodiment of the present disclosure, the encoder sensor may be located inside the hollow of the ring-shaped magnet.

Because there is a range of magnetic flux density that the sensor may recognize depending on a temperature, caution is required in designing a distance between the encoder sensor and the magnet.

Unlike the disk-shaped magnet, the ring-shaped magnet does not require the caution in adjusting the distance from the encoder sensor, but preferably, the encoder sensor is located inside the hollow of the ring-shaped magnet.

In the in-wheel motor according to an embodiment of the present disclosure, the magnetic encoder may further include an encoder board where the encoder sensor is mounted.

The encoder board may be located together with the encoder sensor inside a hollow of the ring-shaped magnet.

In the in-wheel motor according to an embodiment of the present disclosure, the magnetic encoder may further include an encoder board where the encoder sensor is mounted, and an encoder housing coupled to the encoder board and connecting the encoder board to the shaft in the axial direction.

In this regard, the encoder housing may have one end inserted into a hollow of the shaft by a predetermined length in the axial direction and the other end coupled to the encoder board.

In the in-wheel motor according to an embodiment of the present disclosure, the magnetic encoder may further include an encoder board where the encoder sensor is mounted, and an encoder housing coupled to the encoder board and connecting the encoder board to the shaft in the axial direction.

In this regard, the encoder housing may include a circular tubular portion-to-be-inserted inserted into a hollow of the shaft in the axial direction, a connecting portion connected to the portion-to-be-inserted and having an outer diameter greater than an outer diameter of the portion-to-be-inserted, and a protrusion protruding from the connecting portion toward the outside of the shaft.

The encoder board may have a coupling hole defined therein.

The protrusion may be inserted into and extend through the coupling hole to support the encoder board.

The protrusion may include a first protrusion protruding from the connecting portion, and a second protrusion protruding from the first protrusion and having a smaller diameter than the first protrusion.

The coupling hole may have a size allowing only the second protrusion to be inserted.

A length of a hollow of the ring-shaped magnet may be greater than a thickness of the encoder sensor.

Further, a length of a hollow of the ring-shaped magnet may be greater than a sum of a thickness of the encoder board and a thickness of the encoder sensor.

In the in-wheel motor according to an embodiment of the present disclosure, the shielding portion may be made of a magnetic material.

In the in-wheel motor according to an embodiment of the present disclosure, the cover may include an outer cover detachably coupled to the rim by covering an outer open area of the rim, and an inner cover detachably coupled to the rim by covering an inner open area of the rim.

The outer cover may have a screw hole extending therethrough in the axial direction of the shaft. Further, the shielding portion may be inserted into and fastened to or separated and released from the screw hole. Accordingly, the shielding portion may have a structure that is easily detachable from the outer cover.

In the in-wheel motor according to an embodiment of the present disclosure, the shielding portion may include a plate-shaped head that protrudes outwardly of an outer surface of the outer cover and rotates the shielding portion when the shielding portion is fastened or released, and a screw connected to the head and inserted into and fastened to the screw hole.

The screw may have a groove with a circular cross-section recessed in the axial direction of the shaft, and the ring-shaped magnet may be confined to the groove and be mounted in the shielding portion in a replaceable manner.

The screw may have a groove with a circular cross-section recessed in the axial direction of the shaft, and the groove may include a first groove located at a front end in a protruding direction of the screw, wherein the ring-shaped magnet is mounted in the first groove in a replaceable manner, and a second groove located at a rear end in the protruding direction of the screw and securing a space of a smaller size than the first groove to define a clearance space between the ring-shaped magnet and the shielding portion. The second groove may secure the clearance space of a predetermined size between the ring-shaped magnet and the shielding portion, allowing a magnetic flux to proceed straight and preventing leakage of the magnetic flux.

The in-wheel motor according to an embodiment of the present disclosure may further include an O-ring disposed in a contact area between an outer surface of the outer cover and the shielding portion.

The O-ring may be inserted into and fixed to an O-ring receiving groove defined in the outer surface of the outer cover in contact with the shielding portion. Accordingly, sealing between the shielding portion and the outer cover may be improved.

An in-wheel motor according to another aspect of the present disclosure includes a circular rim with both sides open, a cover coupled to the rim to cover open areas at the both sides of the rim and sealing the interior of the rim, a shaft disposed in an axial direction at a center of the rim, a stator surrounding and fixed to the shaft, a motor assembly including a rotor disposed to surround the stator and rotatable about the shaft, wherein the motor assembly is disposed inside the rim to provide a rotational force to the rim, a ring-shaped magnet rotatable together with the cover, and a magnetic encoder located between the shaft and the cover and connected and fixed to the shaft in the axial direction, wherein the magnetic encoder includes an encoder sensor configured to sense a change in a magnetic flux of the ring-shaped magnet. The encoder sensor is located inside a hollow of the ring-shaped magnet.

The in-wheel motor may further include a shielding portion detachably coupled to the cover and shielding an external magnetic field other than the ring-shaped magnet.

The cover may include an outer cover detachably coupled to the rim by covering an outer open area of the rim, and an inner cover detachably coupled to the rim by covering an inner open area of the rim.

The outer cover may have a screw hole extending therethrough in the axial direction of the shaft, and the shielding portion may be detachable from the outer cover by being inserted into and fastened to or released from the screw hole.

The shielding portion may include a plate-shaped head that protrudes outwardly of an outer surface of the outer cover and rotates the shielding portion when the shielding portion is fastened or released, and a screw connected to the head and inserted into and fastened to the screw hole.

The screw may have a groove with a circular cross-section recessed in the axial direction of the shaft,

The groove may include a first groove located at a front end in a protruding direction of the screw, wherein the ring-shaped magnet is mounted in the first groove in a replaceable manner, and a second groove located at a rear end in the protruding direction of the screw and securing a space of a smaller size than the first groove to define a clearance space between the ring-shaped magnet and the shielding portion.

### TECHNICAL EFFECT

According to the embodiment of the present disclosure, the performance of the magnetic encoder used to control the in-wheel motor may be improved by sensing the number of rotations and the speed of the in-wheel motor.

In particular, according to the embodiment of the present disclosure, there are following advantages.

First, because only the shielding portion may be dismantled from the cover without disassembling the entire cover to replace the magnet, replacing the magnet may be made easier. Accordingly, when the magnet performance deteriorates because of the magnet demagnetization during the long-term use, the magnet may be easily replaced with the new magnet by disassembling only the shielding portion screwed to the center of the cover.

Second, by using the ring-shaped magnet instead of the existing disk-shaped magnet, the vulnerability of the shielding structure, which was only able to shield the axial external magnetic field by the shielding plate when using the existing disk-shaped magnet may be compensated for. Accordingly, according to the embodiment of the present disclosure, the external magnetic field in the axial direction of the magnet may be shielded with the shielding plate, and at the same time, the external magnetic field in the radial direction of the magnet may be shielded with the ring shape of the magnet, thereby significantly reducing the vulnerability of the existing shielding structure. As a result, the measurement accuracy of the encoder may be increased and the reliability of the motor control may be improved.

Third, when replacing the existing disk-shaped magnet with the ring-shaped magnet, the measurement accuracy of the encoder may be secured as long as the encoder sensor is located inside the hollow of the ring-shaped magnet. Accordingly, the precise adjustment of the distance between the magnet and the encoder sensor is not required unlike in the case of using the existing disk-shaped magnet, thereby preventing the problem of the deterioration in the accuracy of the encoder caused by the assembly tolerance occurring when assembling the in-wheel motor.

In addition to the above-mentioned effects, specific effects of the present disclosure will be described below while describing the specific details for carrying out the invention.

### BRIEF DESCRIPTION OF DRAWINGS

FIG. 1 is a front perspective view showing an in-wheel motor viewed from one direction according to an embodiment of the present disclosure.
FIG. 2 is a rear perspective view showing an in-wheel motor viewed from another direction according to an embodiment of the present disclosure.
FIG. 3 is a front exploded perspective view showing an in-wheel motor viewed from one direction according to an embodiment of the present disclosure.
FIG. 4 is an exploded rear perspective view showing an in-wheel motor viewed from another direction according to an embodiment of the present disclosure.
FIG. 5 is a half-cross-sectional perspective view showing an in-wheel motor according to an embodiment of the present disclosure.
FIG. 6 is a front exploded perspective view showing a state in which an outer cover is separated from an in-wheel motor according to an embodiment of the present disclosure.
FIG. 7 is an exploded rear perspective view showing a state in which an outer cover is separated from an in-wheel motor according to an embodiment of the present disclosure.
FIG. 8 is a front exploded perspective view showing a state in which only a shielding portion is separated from an in-wheel motor according to an embodiment of the present disclosure.
FIG. 9 is an exploded rear perspective view showing a state in which only a shielding portion is separated from an in-wheel motor according to an embodiment of the present disclosure.
FIG. 10 is an overall cross-sectional view showing an in-wheel motor according to an embodiment of the present disclosure.
FIG. 11 is an enlarged cross-sectional view of an area "A" in FIG. 10.
FIG. 12 is a cross-sectional view showing a magnetic flux caused by a ring-shaped magnet in an area "A" in FIG. 10.
FIG. 13 is an enlarged cross-sectional view of a shielding portion included in an in-wheel motor according to an embodiment of the present disclosure.
FIG. 14 is an exploded perspective view showing a state in which a shielding portion and a ring-shaped magnet are separated from an outer cover of an in-wheel motor according to an embodiment of the present disclosure.

### DETAILED DESCRIPTIONS

The above objects, features, and advantages will be described in detail later with reference to the accompanying drawings. Accordingly, a person having ordinary knowledge in the technical field to which the present disclosure belongs will be able to easily implement the technical idea of the present disclosure. In describing the present disclosure, when it is determined that a detailed description of a known technology related to the present disclosure may unnecessarily obscure the gist of the present disclosure, the detailed description will be omitted. Hereinafter, preferred embodiments according to the present disclosure will be described in detail with reference to the accompanying drawings. In the drawings, the same reference numerals are used to indicate the same or similar components.

Although the terms "first", "second", and the like are used to describe various components, the components are not limited by such terms. These terms are only used to distinguish one component from another component, and unless specifically stated to the contrary, a first component may also be a second component.

Throughout the present document, unless otherwise stated, each element may be singular or plural.

Hereinafter, it may mean that when a first component is described to be disposed "on (or under)" a second component, the first component may not only be disposed in contact with a top surface (or a bottom surface) of the second component, but also be disposed on the second component with a third component interposed therebetween.

Additionally, it should be understood that when a component is described as being "connected to", "combined to", or "coupled to" another component, the components may be directly connected or coupled to each other, but other components may be "interposed" therebetween and the components may be "connected to", "combined to", or "connected to" each other via said other components.

As used herein, the singular constitutes "a" and "an" are intended to include the plural constitutes as well, unless the context clearly indicates otherwise. In this application, terms such as "composed of" or "include" should not be construed as necessarily including all of various components or steps described herein, but should be construed that some components or steps among those may not be included or additional components or steps may be further included.

Additionally, as used herein, singular expressions include plural expressions, unless the context clearly dictates otherwise. In the present application, terms such as "composed of' or "include" should not be construed as necessarily including all of various components or steps described herein, and should be interpreted as being able to not including some of the components or the steps and further including additional components or steps.

Throughout the present document, when referred to as "A and/or B", this means A, B, or A and B, unless specifically stated to the contrary, and when referred to as "C to D", this means equal to or higher than C and equal to or lower than D unless specifically stated to the contrary.

Hereinafter, the present disclosure will be described with reference to drawings showing a configuration of an in-wheel motor according to an embodiment of the present disclosure.

### [Overall structure of in-wheel motor]

Hereinafter, the overall structure of the in-wheel motor according to an embodiment of the present disclosure will be described in detail with reference to the attached drawings.

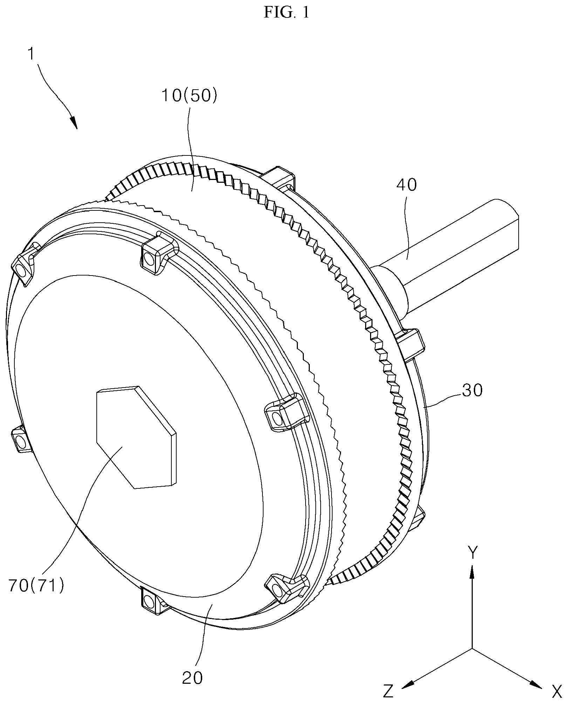

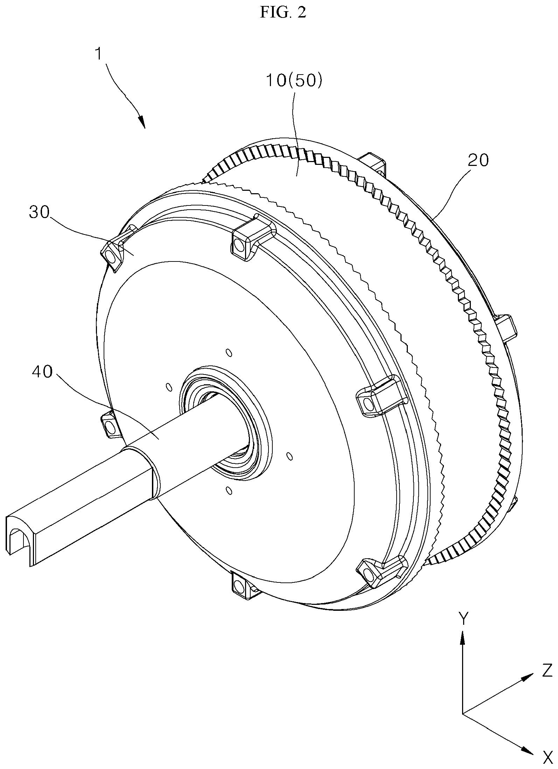

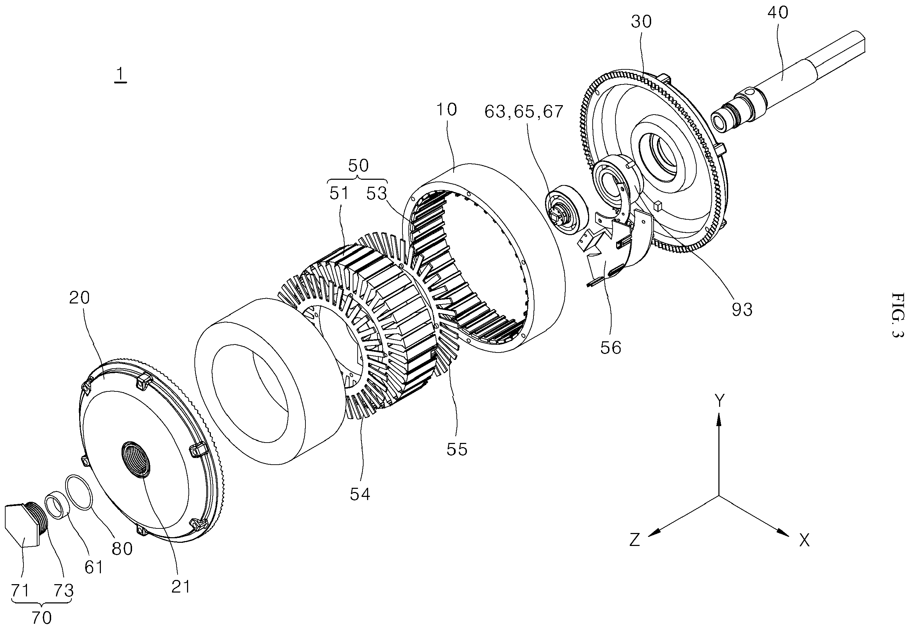

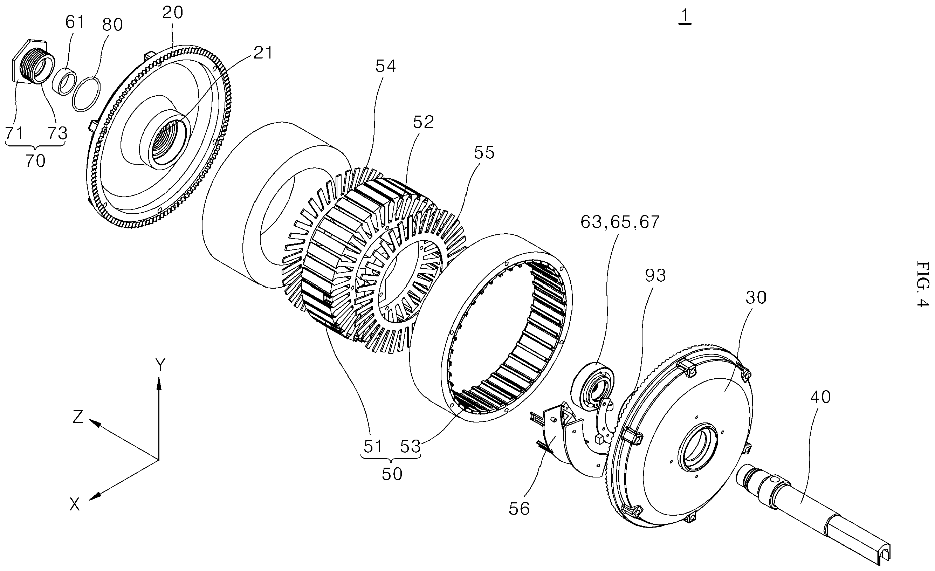

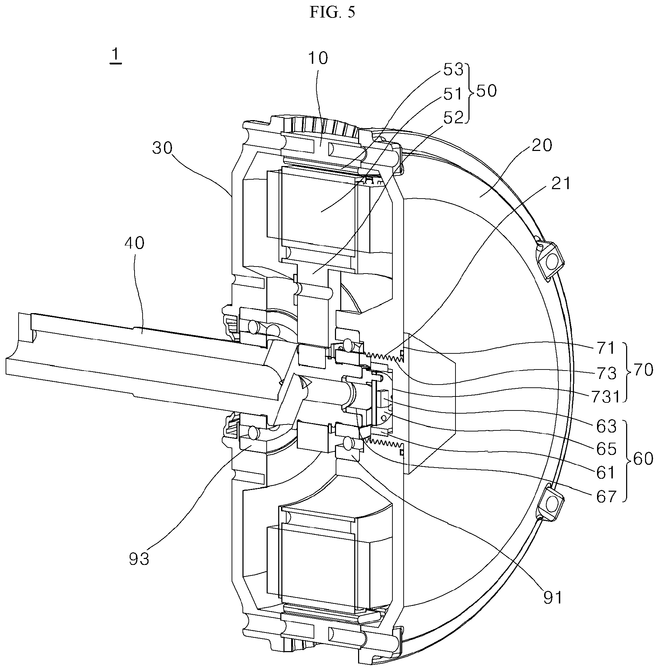

FIGS. 1 and 2 are a front perspective view and a rear perspective view of an in-wheel motor according to an embodiment of the present disclosure, and FIGS. 3 and 4 are a front exploded perspective view and a rear exploded perspective view of an in-wheel motor according to an embodiment of the present disclosure. Further, FIG. 5 is a half-cross-sectional perspective view showing an in-wheel motor according to an embodiment of the present disclosure.

As shown, an in-wheel motor 1 according to an embodiment of the present disclosure includes a rim 10, a cover 20 and 30, a shaft 40, a motor assembly 50, a magnetic encoder 60, and a shielding portion 70.

The rim 10 is a circular rigid member that forms a wheel. Although not shown separately, a tire and the like may be coupled to surround an outer ring of the rim 10.

A hollow may be defined inside the rim 10. The motor assembly 50 may be built into the hollow of the rim 10. In addition, various electrical and electronic components, for example, a Hall sensor 56 (see FIG. 3), may be further disposed.

The motor assembly 50 is coupled to the inside of the rim 10 and is a driving apparatus that rotates the rim 10.

The motor assembly 50 may be disposed between the rim 10 and the shaft 40.

The motor assembly 50 includes a stator 51 and a rotor 53.

The stator 51 is coupled by surrounding the shaft 40, and receives power from a power supply line connected to the outside via a power supply line passage 42 defined along a center of the shaft 40.

The stator 51 is disposed to surround and fix the shaft 40 by a core 52.

The rotor 53 is disposed to surround the stator 51 with an air gap interposed therebetween. The rotor 53 includes a plurality of permanent magnets.

When the stator 51 receives the power, an electromagnetic force may be generated between the stator 51 and the rotor 53. Because of such electromagnetic force, the rotor 53 rotates around the stator 51 in a circumferential direction on the outside of the stator 51.

A plurality of insulators 54 and 55 may be disposed on both side surfaces of the stator 51, respectively.

For example, the first insulator 54 may be disposed on an outer surface of the stator 51. Further, the second insulator 55 may be disposed on the other side surface of the stator 51.

Additionally, the Hall sensor 56 may be assembled on a board and disposed at one side of the motor assembly 50.

The Hall sensor 56 refers to a sensor that senses a magnetic force within the motor assembly 50. The Hall sensor 56 may be located close to the motor assembly 50, and at least two Hall sensors 56 may be disposed on the board.

The motor assembly 50, that is, the stator 51 and the rotor 53, is located in the inner hollow of the rim 10. The stator 51 is directly connected to the shaft 40 and is fixed without rotating with the shaft 50, and only the rotor 53 rotates on the outside of the stator 51.

When the rotor 53 rotates, the circular rim 10 coupled to the rotor 53 rotates, thereby enabling rotation of the in-wheel motor 1.

The covers 20 and 30 are coupled to the rim 10 to cover open areas at both sides of the rim 10.

The covers 20 and 30 are coupled to cover the open areas at both sides of the rim 10, thereby blocking an internal space of the rim 10 from the outside. Various components of the in-wheel motor 1, including the motor assembly 50, are built into the internal space of the rim 10, and are able to be protected from the outside as exposure thereof to the outside is blocked.

For example, the covers 20 and 30 include the outer cover 20 and the inner cover 30.

The outer cover 20 may cover the outer open area of the rim 10 and may be detachably coupled to the rim 10.

As a specific example, the outer cover 20 has a bolt fastening hole 28 defined therein.

The bolt fastening hole 28 of the outer cover 20 is located at an edge of the disk-shaped outer cover 20. A bolt fastening hole 18 corresponding to the bolt fastening hole 28 of the outer cover 20 is defined at an outer edge of the rim 10. Accordingly, the bolt fastening hole 28 of the outer cover 20 and the outer bolt fastening hole 18 of the rim 10 may be assembled with and disassembled from each other using a fastening bolt.

The inner cover 30 may cover an inner open area of the rim 10 and may be detachably coupled to the rim 10.

As a specific example, the inner cover 30 has a bolt fastening hole 38 defined therein.

The bolt fastening hole 38 of the inner cover 30 is located at an edge of the disk-shaped inner cover 30. A bolt fastening hole 19 corresponding to the bolt fastening hole 38 of the inner cover 30 is defined at an inner edge of the rim 10. Accordingly, the bolt fastening hole 38 of the inner cover 30 and the outer bolt fastening hole 19 of the rim 10 may be assembled with and disassembled from each other using a fastening bolt.

Additionally, a screw hole 21 may be defined in an outer surface 23 of the outer cover 20.

The screw hole 21 may be defined through the outer surface 23 of the outer cover 20 in an axial direction of the shaft 40 toward a location facing the shaft 40.

The screw hole 21 is defined for the shielding portion 70, which will be described later, to be coupled to or released from the outer cover 20 via screw fastening as needed. In other words, the screw hole 21 may be used as a fastening hole through which the shielding portion 70 may be attached to and detached from the outer cover 20.

The shaft 40 may be disposed in the axial direction at a center of the rim 10.

The shaft 40 may be coupled through a center of the inner cover 30, and an encoder sensor 63 may be connected to one end, that is, an inner end, of the shaft 40.

The magnetic encoder 60 is a sensor that enables control of the in-wheel motor 1 by sensing the number of rotations and a speed of the in-wheel motor 1.

For example, the magnetic encoder 60 includes a ring-shaped magnet 61 and the encoder sensor 63.

The ring-shaped magnet 61 is coupled to the cover, specifically the outer cover 20, and rotates together with the outer cover 20.

The encoder sensor 63 senses a change in a magnetic flux of the ring-shaped magnet 61 when the ring-shaped magnet 61 coupled to the outer cover 20 rotates.

Generally, an encoder that senses the number of rotations and a speed of a motor includes an optical encoder and a magnetic encoder.

However, the reason why the magnetic encoder 60 is used in the in-wheel motor 1 according to an embodiment of the present disclosure is because the magnetic encoder 60 has excellent environmental reliability. In other words, it is more desirable to use the magnetic encoder 60 to detect the number of rotations and the speed of the in-wheel motor 1 used outdoors.

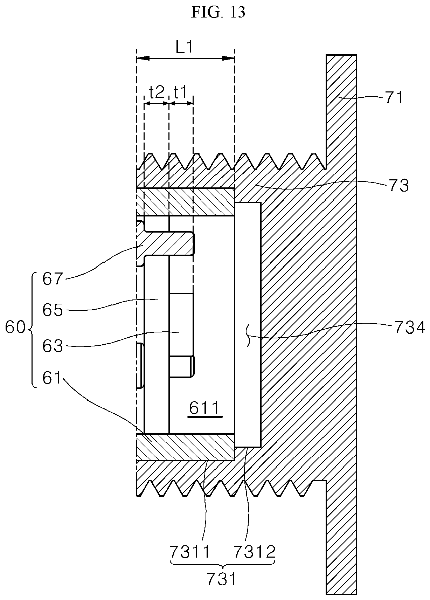

In one example, the encoder sensor 63 is preferably located inside a hollow 611 (see FIG. 13) of the ring-shaped magnet 61.

When a disk-shaped magnet, rather than the ring-shaped magnet 61, is disposed inside the cover, the encoder sensor is disposed in a direction facing the disk-shaped magnet, and a shielding plate is disposed outwardly of the cover, external magnetic field shielding occurs only in an axial direction of the disk-shaped magnet. In other words, there is a disadvantage that the magnetic field shielding is achieved only in the axial direction of the disk-type magnet, but not in a radial direction thereof.

According to an embodiment of the present disclosure, the ring-shaped magnet 61 is mounted inside the shielding portion 70 that is fastened to the screw hole 21 of the outer cover 20, and the encoder sensor 63 is located inside the hollow 611 (see FIG. 13) of the ring-shaped magnet 61.

As a result, the magnetic field shielding in the axial direction of the ring-shaped magnet 61 (i.e., a Z-axis direction) may become available by the shielding portion 70, and the magnetic field shielding in the radial direction of the ring-shaped magnet 61 (i.e., X and Y-axis directions) may also become available by the ring shape of the magnet. Because of this, accuracy of the magnetic encoder 60 may be improved.

In addition, the magnetic encoder 60 further includes an encoder board 65 and an encoder housing 67.

The encoder board 65 refers to a circuit board on which the encoder sensor 63 is mounted. The encoder board 65 may be located together with the encoder sensor 63 inside the hollow 611 (see FIG. 13) of the ring-shaped magnet 61.

The encoder housing 67 is a body of the magnetic encoder 60 to which the encoder board 65 is coupled, and serves to connect the encoder board 65 to the inner end of the shaft 40 in the axial direction.

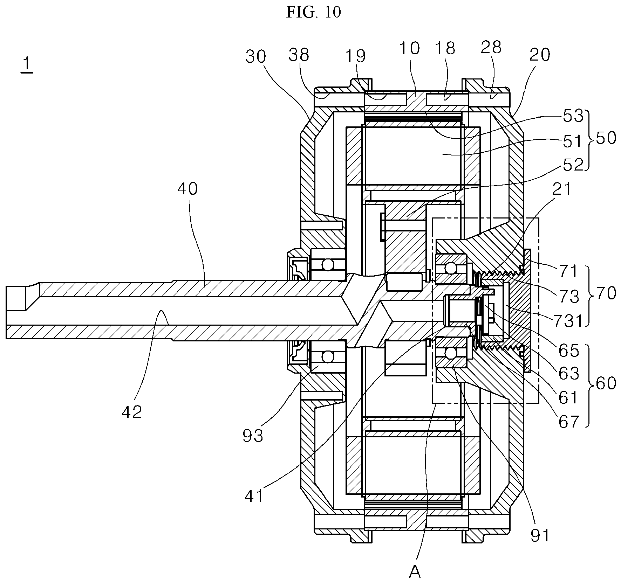

For example, one end of the encoder housing 67 may be inserted by a predetermined length in the axial direction into a hollow 41 (see FIG. 10) of a predetermined length defined in the inner end of the shaft 40. In addition, the encoder board 65 is coupled to the other end of the encoder housing 67 to fix a location of the encoder sensor 63.

In one example, in the magnetic encoder 60, when the ring-shaped magnet 61 rotates in association with the rotation of the rotor 53, the rim 10, and the outer cover 20, the encoder sensor 63 senses the change in the magnetic flux while being located in the hollow 611 (see FIG. 13) of the ring-shaped magnet 61.

The encoder sensor 63 outputs an A/B/Z signal based on the results of sensing the change in the magnetic flux.

As such, the magnetic encoder 60 may accurately detect the number of rotations and the speed of the in-wheel motor 1 by sensing the change in the magnetic flux of the ring-shaped magnet 61 connected to the outer cover 20 that is connected to the rotor 53 and the rim 10.

The shielding portion 70 shields a magnetic field effect other than the ring-shaped magnet 61 to increase the detection accuracy of the magnetic encoder 60.

In other words, the shielding portion 70 prevents the encoder sensor 63 from being affected by an external stray field other than the ring-shaped magnet 61 so as to accurately detect the number of rotations and the speed of the in-wheel motor 1 by detecting only the change in the magnetic flux of the rotating ring-shaped magnet 61.

The shielding portion 70 may be made of a magnetic material to shield the external magnetic field.

In an embodiment of the present disclosure, the shielding portion 70 may be detachably coupled to the cover, particularly, the outer cover 20.

For example, the shielding portion 70 may be formed in a shape of a bolt, and specifically include a head 71 corresponding to a bolt head and a screw 73 corresponding to a screw body of the bolt.

The head 71 may have a polygonal plate shape such that an operator may easily rotate the shielding portion 70 outside the outer cover 20.

As shown, the head 71 has a hexagonal plate shape, but the present disclosure is not limited thereto. Accordingly, the head 71 may be formed in various polygonal plate shapes (e.g., square, octagon, and the like) other than the hexagonal plate shape.

The shielding portion 70 may be screwed into the screw hole 21 of the outer cover 20 and assembled to the outer cover 20 or may be easily separated from the outer cover 20 as the screw fastening is released, depending on a rotation direction of the head 71.

Additionally, the head 71 may have a shape of protruding outwardly of the outer surface 23 of the outer cover 20. As such, when the head 71 has the shape of protruding outwardly of the outer surface 23 of the outer cover 20, rotation manipulation of the head 71 may be easily performed.

Depending on the rotation direction of the head 71, the screw 73 is fastened to the screw hole 21 and assembled to the outer cover 20, or is released and separated from the outer cover 20.

The shielding portion 70 has the structure that is easily detachable from the outer cover 20 so as to be assembled thereto and dissembled therefrom, making it easier to separate and replace the ring-shaped magnet 61 mounted on the shielding portion 70 and shortening a work time.

When the shielding portion 70 is fixed to the outside of the outer cover 20 and the ring-shaped magnet 61 is fixed to the inside of the outer cover 20, a complex removal work of removing an entirety of the outer cover 20 from the rim 10 is required to remove and replace the ring-shaped magnet 61. In other words, after completely dismantling and separating the outer cover 20 from the rim 10, the ring-shaped magnet 61 located inside the outer cover 20 may be replaced. In this case, the magnet replacement work is complicated and requires a lot of work time. Further, the work of dismantling the outer cover 20 from the rim 10 is complicated and difficult, causing inconvenience during the work.

The in-wheel motor 1 according to an embodiment of the present disclosure has the structure in which the shielding portion 70 is detachable from the outer cover 20 by the screw fastening scheme, making it easy to replace the ring-shaped magnet 61.

Further, the in-wheel motor 1 according to an embodiment of the present disclosure has an O-ring 80 on the outer surface 23 of the outer cover 20.

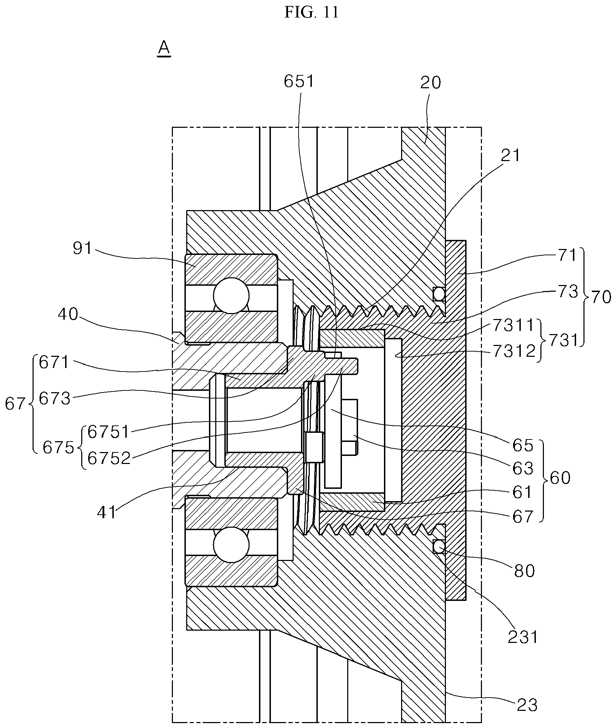

The O-ring 80 may be inserted into and fixed to an O-ring receiving groove 231 (see FIG. 11) defined in the outer surface 23 of the outer cover 20.

The O-ring 80 may be made of an elastic material (e.g., rubber and the like).

The O-ring 80 may be located at a contact area between the outer surface 23 of the outer cover 20 and the shielding portion 70, more specifically, the head 71.

The O-ring 80 may seal a space between the outer cover 20 and the head 71 to increase sealing between the outer cover 20 and the shielding portion 70.

In one example, the in-wheel motor 1 according to an embodiment of the present disclosure includes a plurality of bearings 91 and 92.

The plurality of bearings 91 and 92 includes the first bearing 91 and the second bearing 93.

The first bearing 91 is located between the shaft 40 and the outer cover 20.

The second bearing 93 is located between the shaft 40 and the inner cover 30 at a distance from the first bearing 91.

The first bearing 91 may reduce friction between the shaft 40 and the outer cover 20. The shaft 40 is coupled to the stator 51 and does not rotate, and the outer cover 20 is coupled to one side of the rim 10, which rotates in association with the rotor 53, and rotates. The outer cover 20 is supported by the shaft 40 by the first bearing 91, allowing quiet and stable rotation.

The second bearing 93 may reduce friction between the shaft 40 and the inner cover 30. The shaft 40 is coupled to the stator 51 and does not rotate, and the inner cover 30 is coupled to the other side of the rim 10, which rotates in association with the rotor 53, and rotates. The inner cover 30 is supported by the shaft 40 by the second bearing 93, allowing quiet and stable rotation.

As such, the in-wheel motor 1 according to an embodiment of the present disclosure has the structure in which the single shaft 40 extends through the outer cover 20 and the inner cover 30 with the motor assembly 50 interposed therebetween and respective both ends of the outer cover 20 and the inner cover 30 are supported by the shaft 40 by the first and second bearings 91 and 93.

For this reason, when the in-wheel motor 1 operates, the rim 10 may rotate stably while being supported on the shaft 40. In particular, when the rim 10 rotates, postural shaking of the rim 10 is suppressed, thereby improving travel stability of the in-wheel motor 1.

### [Detailed components of magnetic encoder including ring-shaped magnet]

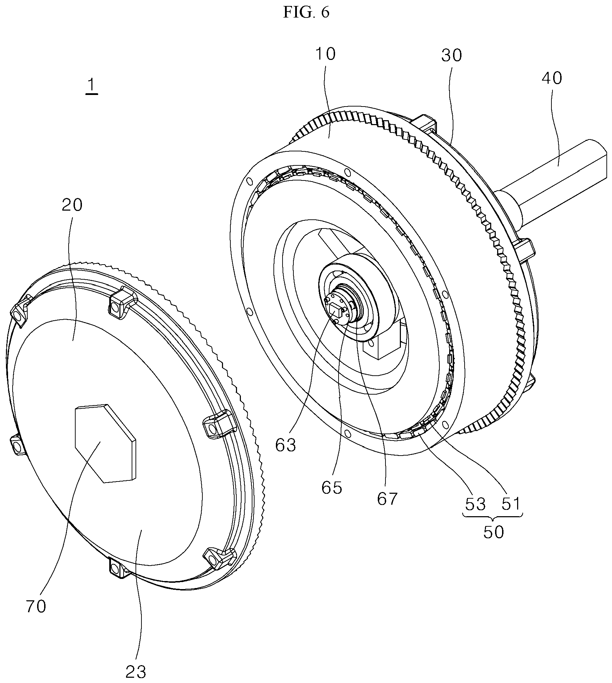

Hereinafter, with reference to FIGS. 6 to 10, detailed components of the magnetic encoder 60 including the ring-shaped magnet 61 in the in-wheel motor according to an embodiment of the present disclosure and an operational relationship between such detailed components will be described.

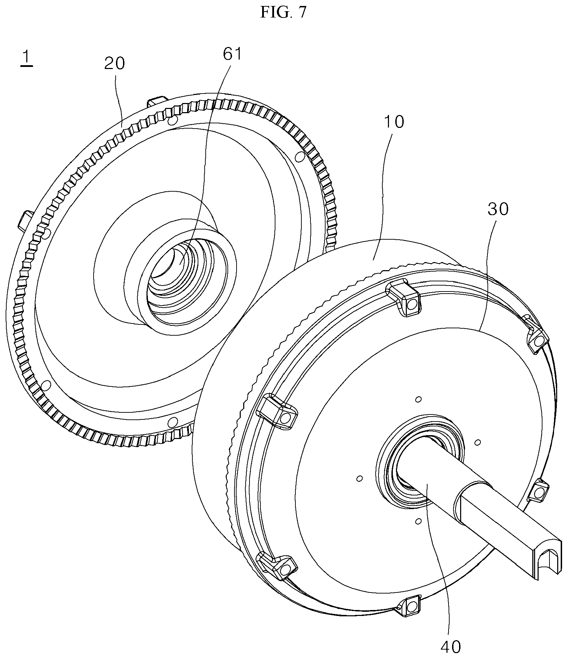

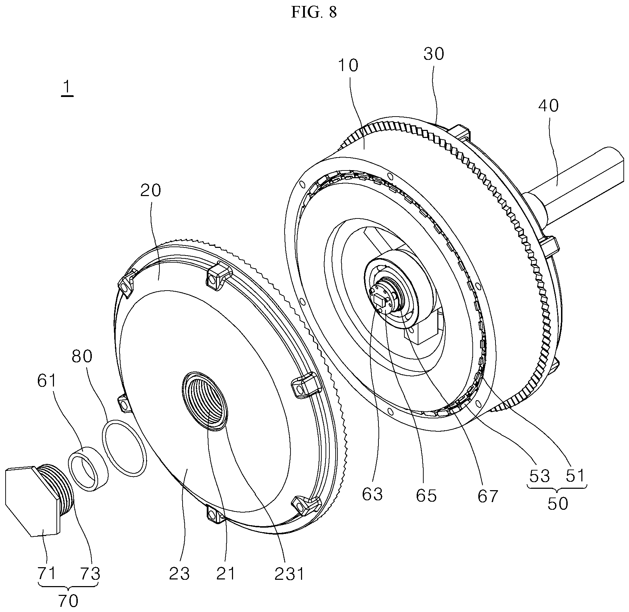

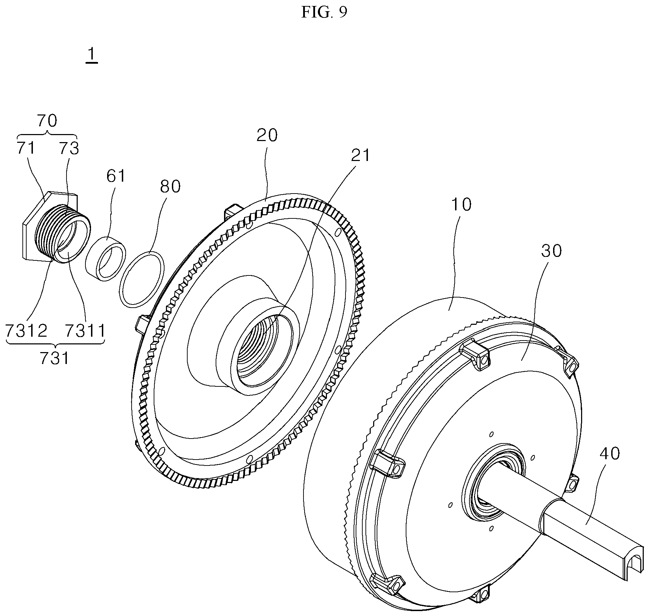

FIGS. 6 and 7 are front and rear exploded perspective views showing a structure in which an outer cover is separated from an in-wheel motor, and FIGS. 8 and 9 are front and rear exploded perspective views showing a structure in which a shielding portion is separated from an outer cover of an in-wheel motor. Further, FIG. 10 is an overall cross-sectional view showing an in-wheel motor according to an embodiment of the present disclosure.

The in-wheel motor 1 according to an embodiment of the present disclosure uses the magnetic encoder 60 including the ring-shaped magnet 61 to sense the number of rotations and the speed of the in-wheel motor 1.

The in-wheel motor 1 according to an embodiment of the present disclosure uses the ring-shaped magnet 61 instead of the general disk-shaped magnet, thereby effectively blocking the disadvantage of the disk-shaped magnet, that is, the external magnetic field in the radial direction of the magnet (i.e., the X-axis and the Y-axis).

In other words, blocking the external magnetic field in the axial direction of the magnet (i.e., the Z-axis) may become available by the shielding portion 70 that is coupled to the outer cover 20, and at the same time, the external magnetic field in the radial direction of the magnet (i.e., the X-axis and the Y-axis) may be blocked using the ring-shaped magnet 61.

In addition, the in-wheel motor 1 according to an embodiment of the present disclosure may satisfy the accuracy of the encoder sensor simply by placing the encoder sensor 63 inside the hollow 611 (see FIG. 13) of the ring-shaped magnet 61.

For this reason, when using the disk-shaped magnet, there is an advantage that distance adjustment between the disk-shaped magnet and the encoder sensor 63 is not strictly required.

When the disk-shaped magnet is used, the distance between the disk-shaped magnet and the encoder sensor 63 may not be accurately adjusted because of an assembly tolerance generated when assembling the in-wheel motor 1. In this case, the accuracy of the magnetic encoder 60 is reduced.

In contrast, in the case of the magnetic encoder 60 using the ring-shaped magnet 61, it is sufficient that the encoder sensor 63 is located inside the hollow of the ring-shaped magnet 61, and precise distance adjustment between the encoder sensor 63 and the ring-shaped magnet 61 is not required (see FIG. 10). For this reason, there is an advantage in securing the accuracy of the magnetic encoder 60.

Specifically, the magnetic encoder 60 includes the ring-shaped magnet 61, the encoder sensor 63, the encoder board 65, and the encoder housing 67.

The ring-shaped magnet 61 refers to a magnet member that has a circular ring shape and has a hollow defined therein, unlike the disk-shaped magnet used in the general magnetic encoder 60.

The ring-shaped magnet 61 may be mounted in a groove 731 of the shielding portion 70 that is screwed to the outer cover 20. As the shielding portion 70 is coupled to the outer cover 20, the ring-shaped magnet 61 rotates together with the outer cover 20 when the outer cover 20 rotates.

The encoder sensor 63 is located inside the hollow 611 (see FIG. 13) of the ring-shaped magnet 61.

The encoder sensor 63 senses the change in the magnetic flux of the ring-shaped magnet 61 when the ring-shaped magnet 61 rotates, thereby sensing the number of rotations and the speed of the in-wheel motor 1.

As the encoder sensor 63 is located inside the hollow 611 (see FIG. 13) of the ring-shaped magnet 61, the external magnetic field shielding in the radial direction of the ring-shaped magnet 61 becomes available. The external magnetic field shielding in the axial direction of the ring-shaped magnet 61 may become available by the shielding portion 70.

As such, according to an embodiment of the present disclosure, the magnetic field shielding in the axial direction (i.e., the Z-axis direction) of the ring-shaped magnet 61 becomes available by the shielding portion 70, and the magnetic field shielding in the radial direction of the ring-shaped magnet 61 (i.e., the X-axis direction and the Y-axis direction) also becomes available by the shape of the ring-shaped magnet 61.

The encoder board 65, as the circuit board on which the encoder sensor 63 is mounted, may have a plurality of coupling holes 651 (see FIG. 11). Such coupling hole 651 becomes a hole into which a protrusion 675 (see FIG. 11) of the encoder housing 67, which will be described later, is inserted.

The encoder board 65 may be located inside the hollow 611 (see FIG. 13) of the ring-shaped magnet 61 together with the encoder sensor 63.

The encoder housing 67 is a body of the magnetic encoder 60 to which the encoder board 65 is coupled, and serves to connect the encoder board 65 to the inner end of the shaft 40 in the axial direction.

As a specific example, one end of the encoder housing 67 may be inserted into the hollow 41 defined at the inner end of the shaft 40. The encoder board 65 is coupled to the other end of the encoder housing 67. The protrusion 675 (see FIG. 11) of the encoder housing 67 may be inserted into and coupled to the coupling hole 651 (see FIG. 11) of the encoder board 65.

Hereinafter, a detailed configuration and a coupling relationship of the magnetic encoder 60 will be described in more detail with reference to the attached FIGS. 11 to 13.

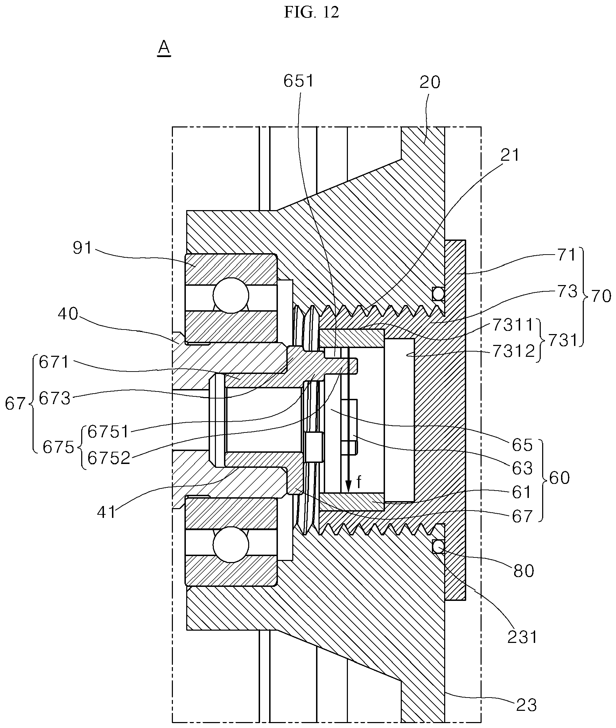

FIG. 11 is an enlarged cross-sectional view of an area "A" in FIG. 10, FIG. 12 is a cross-sectional view showing a magnetic flux caused by a ring-shaped magnet in an area "A" in FIG. 10, and FIG. 13 is an enlarged cross-sectional view of a shielding portion included in an in-wheel motor.

As shown, the ring-shaped magnet 61 may be mounted in the groove 731 of the shielding portion 70 that is screwed to the outer cover 20. Because the shielding portion 70 is coupled to the outer cover 20, when the outer cover 20 rotates, the ring-shaped magnet 61 mounted in the groove 731 of the shielding portion 70 rotates together with the outer cover 20.

The encoder sensor 63 is located inside the hollow 611 (see FIG. 13) of the ring-shaped magnet 61. The encoder sensor 63 senses the change in the magnetic flux of the ring-shaped magnet 61 when the ring-shaped magnet 61 rotates, thereby sensing the number of rotations and the speed of the in-wheel motor 1.

As the encoder sensor 63 is located inside the hollow 611 (see FIG. 13) of the ring-shaped magnet 61, the external magnetic field shielding in the radial direction of the ring-shaped magnet 61 is available. In this regard, the external magnetic field shielding in the axial direction of the ring-shaped magnet 61 may become available by the shielding portion 70.

The encoder board 65 is the circuit board on which the encoder sensor 63 is mounted. The encoder board 65 has the plurality of coupling holes 651. The coupling hole 651 becomes a hole into which a portion of the encoder housing 67, which will be described later, that is, the protrusion 675 is inserted.

The encoder board 65 may be located inside the hollow 611 of the ring-shaped magnet 61 together with the encoder sensor 63.

The encoder housing 67 connects the encoder board 65 to the inner end of the shaft 40 in the axial direction.

For example, the encoder housing 67 includes a portion-to-be-inserted 671, a connecting portion 673, and the protrusion 675.

The portion-to-be-inserted 671 refers to a circular tube-shaped portion that is inserted in the axial direction into a hollow 411 defined at the inner end of the shaft 40.

The portion-to-be-inserted 671 may be inserted into and attached to the hollow 411 of the shaft 40 to firmly fix the locations of the encoder sensor 63 and the encoder board 65.

For example, when inserting the portion-to-be-inserted 671 into the hollow 411 of the shaft 40, the portion-to-be-inserted 671 may be inserted after an adhesive is applied and then be cured at a high temperature for a set time, thereby being firmly fixed to the shaft 40.

The connecting portion 673, as a portion connected to the portion-to-be-inserted 671, has a shape whose outer diameter is expanded than that of the portion-to-be-inserted 671.

The protrusion 675 protrudes from the connecting portion 673 toward the outside of the shaft 40, that is, in a direction opposite to a direction in which the portion-to-be-inserted 671 is inserted.

The protrusion 675 is inserted into each of the plurality of coupling holes 651 defined in the encoder board 65 and supports the encoder board 65. The number and locations of protrusions 675 may correspond to the number and locations of coupling holes 651.

As a specific example, the protrusion 675 includes a first protrusion 6751 and a second protrusion 6752.

The first protrusion 6751 refers to a protrusion protruding from a surface of the connecting portion 673.

The second protrusion 6752 refers to a protrusion protruding further from a protruding tip of the first protrusion 6751. The second protrusion 6752 may have a smaller diameter than the first protrusion 6751.

For example, the first protrusion 6751 refers to a circular cross-sectional protrusion with a first diameter, and the second protrusion 6752 refers to a circular cross-sectional protrusion with a second diameter that protrudes by a predetermined length from the protruding tip of the first protrusion 6751. In this regard, the first diameter may be greater than the second diameter.

The coupling hole 651 defined in the encoder board 65 has a size and a shape corresponding to those the second protrusion 6752. As a result, the coupling hole 651 defined in the encoder board 65 may have a shape that only the second protrusion 6752 is inserted, then extends through the coupling hole 651, and then protrudes, and the encoder board 65 may be restricted in the insertion by being caught on the tip of the first protrusion 6751.

When a length of the hollow 611 of the ring-shaped magnet 61 is L1 (see FIG. 13), it is desirable that L1 is greater than t1, which is a thickness of the encoder sensor 63 (see FIG. 13). In other words, only when the relationship L1>t1 is satisfied, the encoder sensor 63 may be located inside the hollow of the ring-shaped magnet 61, and the external magnetic field shielding performance in the radial direction of the ring-shaped magnet 61 may be satisfied.

Furthermore, when the length of the hollow 611 of the ring-shaped magnet 61 is L1 (see FIG. 13), it is preferable that L1 greater than a sum of t1, which is the thickness of the encoder sensor 63, and t2, which is a thickness of the encoder board 65 (see FIG. 13). That is, when the relationship L1>t1+t2 is satisfied, the encoder sensor 63 may be more stably located inside the hollow of the ring-shaped magnet 61, as shown in FIG. 13. Accordingly, the external magnetic field shielding performance in the radial direction of the ring-shaped magnet 61 may be satisfied.

As such, in the magnetic encoder 60 according to an embodiment of the present disclosure, when the ring-shaped magnet 61 rotates in association with the rotation of the rotor 53, the rim 10, and the outer cover 20, the encoder sensor 63 senses the change in the magnetic flux while being located inside the hollow 611 of the ring-shaped magnet 61.

In this regard, because a magnetic flux f of the ring-shaped magnet 61 moves straight in a direction of an arrow shown in FIG. 12, the accuracy of the magnetic encoder 60 may be trusted as long as the encoder sensor 63 is located inside the hollow 611 of the ring-shaped magnet 61.

Therefore, the problem in which the accuracy of the magnetic encoder 60 is reduced because of a failure in adjusting the distance between the magnet and the encoder sensor when using the existing disk-shaped magnet resulted from the assembly tolerance of the in-wheel motor 1 may be prevented in advance.

The encoder sensor 63 may sense the change in the magnetic flux f of the ring-shaped magnet 61 and output the A/B/Z signal, and may accurately sense the number of rotations and the speed of the in-wheel motor 1.

### [Detailed components of shielding portion where ring-shaped magnet is mounted]

Hereinafter, with reference to FIGS. 6 to 14, the detailed components of the shielding portion 70 in which the ring-shaped magnet 61 is mounted in the in-wheel motor according to an embodiment of the present disclosure and an operational relationship between such detailed components will be described.

The shielding portion 70 serves to shield the encoder sensor 63 from the magnetic field other than the ring-shaped magnet 61 to increase the detection accuracy of the magnetic encoder 60.

In other words, the shielding portion 70 allows the encoder sensor 63 to be not affected by the external stray field other than the ring-shaped magnet 61 so as to detect only the change in the magnetic flux of the ring-shaped magnet 61. In particular, the shielding portion 70 provides the function of shielding the external magnetic field in the axial direction of the ring-shaped magnet 61 (i.e., the Z-axis).

The shielding portion 70 may be made of the magnetic material to shield the external magnetic field.

The shielding portion 70 may be formed in the shape of the bolt screwed to the outer cover 20. For example, the shielding portion 70 includes the head 71 corresponding to the head of the bolt and the screw 73 corresponding to the screw body of the bolt.

The head 71 may have the polygonal plate shape so as to be easily rotated from outside the outer cover 20. The head 71 may have the hexagonal plate shape. As another example, the head 71 may have the polygonal shape that is easy to rotate, for example, the plate shape such as the square or the octagon.

The shielding portion 70 may be screwed into the screw hole 21 of the outer cover 20 and assembled to the outer cover 20 or may be separated from the outer cover 20 as the screw fastening is released, depending on the rotation manipulation of the head 71.

The head 71 may protrude outwardly of the outer surface 23 of the outer cover 20. When the head 71 protrudes outwardly of the outer surface 23 of the outer cover 20, rotating the head 71 may become easier.

The screw 73 refers to a male screw body that is fastened into or released from the screw hole 21 based on the rotation of the head 71.

As such, the shielding portion 70 may have a structure that may be easily coupled to and separated from the outer cover 20. Accordingly, the separation and the replacement of the ring-shaped magnet 61 mounted in the groove 731 defined inside the screw 73 of the shielding portion 70 may become easier.

When the shielding portion 70 is fixed to the outside of the outer cover 20 and the ring-shaped magnet 61 is fixed to the inside of the outer cover 20, the complex work of separating the entirety of the outer cover 20 from the rim 10 to remove and replace the ring-shaped magnet 61 is required.

In other words, when the magnetic force of the ring-shaped magnet 61 is weakened as the ring-shaped magnet 61 is used for a long time, the previously used ring-shaped magnet 61 must be removed and a new ring-shaped magnet 61 must be installed.

When the shielding portion 70 is not structured to be partially separated from the outer cover 20 and the ring-shaped magnet 61 is coupled to the inside of the outer cover 20, the complex work of disassembling the outer cover 20 from the rim 10 is required to replace the ring-shaped magnet 61. The work of completely separating the outer cover 20 attached to the rim 10 from the rim 10 is very complicated and requires a lot of work time.

The in-wheel motor 1 according to an embodiment of the present disclosure has the structure in which the shielding portion 70 is partially coupled to and separated from the outer cover 20 via the screw fastening, the groove 731 is defined in the shielding portion 70, and the ring-shaped magnet 61 is mounted in such groove 731. Accordingly, the ring-shaped magnet 61 may be replaced after partially separating only the shielding portion 70, without completely removing the outer cover 20 to replace the ring-shaped magnet 61.

Referring to the enlarged cross-sectional views shown in FIGS. 11 to 13, the screw 73 has the groove 731 with the circular cross-section. The groove 731 defined in the screw 73, as the groove with the circular cross-section recessed in the axial direction of the shaft 40, may be a groove with a circular cross-section having a center the same as a center of a cross-section of the shaft 40.

The ring-shaped magnet 61 may be inserted into and fixed to the groove 731 defined in the screw 73.

The ring-shaped magnet 61 is confined in a location to the inside of the groove 731, but is able to be separated to the outside of the groove 731 when necessary, so that the replacement thereof with the new ring-shaped magnet 61 may become available.

More specifically, the screw 73 has the groove 731 with the circular cross-section recessed in the axial direction of the shaft 40, and the groove 731 includes a first groove 7311 and a second groove 7312.

The first groove 7311 is located at a front end in a protruding direction of the screw 73.

The first groove 7311 provides a space for the ring-shaped magnet 61 to be inserted and installed. In other words, the ring-shaped magnet 61 may be inserted into and fixed to the first groove 7311 of the screw 73, and may be separated from the first groove 7311 to the outside when necessary.

The second groove 7312 is located at a rear end in the protruding direction of the screw 73.

The second groove 7312 secures a smaller space than that of the first groove 7311.

Unlike the first groove 7311, the second groove 7312 is an empty space in which the ring-shaped magnet 61 is not inserted, and defines a predetermined clearance space 734 (see FIG. 13) between the ring-shaped magnet 61 inserted into the first groove 7311 and the shielding portion 70.

The ring-shaped magnet 61 is not inserted into the clearance space 734 defined by the second groove 7312 and the clearance space 734 always remains empty. As such, the second groove 7312 allows the clearance space 734 of a predetermined size to be secured between the ring-shaped magnet 61 and the shielding portion 70, so that the magnetic flux f (see FIG. 12) travels straight and leakage of the magnetic flux f is prevented.

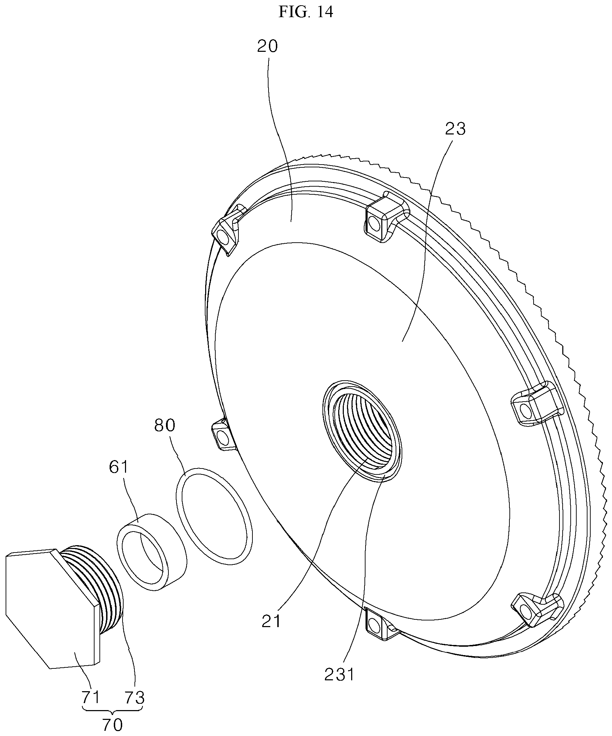

FIG. 14 is an exploded perspective view showing a state in which a shielding portion and a ring-shaped magnet are separated from an outer cover of an in-wheel motor according to an embodiment of the present disclosure.

Referring to FIG. 14, when the ring-shaped magnet 61 is used for a long time, the ring-shaped magnet 61 demagnetizes and it becomes necessary to replace the same with the new ring-shaped magnet 61.

In this case, without removing the entire outer cover 20 from the in-wheel motor, only the shielding portion 70 screwed to the outer cover 20 may be easily separated and the ring-shaped magnet 61 inserted into the screw 73 of the shielding portion 70 may be easily separated to the outside.

As a result, the replacement work of the ring-shaped magnet 61 becomes simpler and the work time may be significantly shortened.

As such, by using the ring-shaped magnet 61 in the magnetic encoder 60 and placing the encoder sensor 63 inside the hollow of the ring-shaped magnet 61, the magnetic flux f may travel straight and the amount of change in the magnetic flux depending on the location of the encoder sensor 63 may be reduced.

Furthermore, by further defining the second groove 7312 inside the screw 73 of the shielding portion 70, the empty clearance space is secured between the shielding portion 70 and the ring-shaped magnet 61, thereby preventing the magnetic flux leakage.

Furthermore, the external magnetic field shielding effect may be strengthened in the axial direction (i.e., the Z-axis direction) as well as the radial direction (i.e., the Y-axis direction and the Z-axis direction) for the ring-shaped magnet 61, and the structure in which the shielding portion 70 surrounds the ring-shaped magnet 61 may be achieved. Accordingly, the reliability to the external environment may be improved.

In addition, when the ring-shaped magnet 61 is damaged or demagnetizes and does not function properly, the ring-shaped magnet 61 may be easily replaced by disassembling only the shielding portion 70 without disassembling the entire outer cover 20.

As described above, the present disclosure has been described with reference to illustrated drawings, but the present disclosure is not limited by the embodiments disclosed herein and the drawings, and it is obvious that various modifications may be made by those skilled in the art within the scope of the technical idea of the present disclosure. In addition, although effects based on the components of the present disclosure were not explicitly described and illustrated when describing the embodiment of the present disclosure earlier, it is natural that the predictable effects of the corresponding components should also be recognized.

## Claims

1. An in-wheel motor comprising:
a circular rim with both sides open;
a cover coupled to the rim to cover open areas at the both sides of the rim and sealing the interior of the rim;
a shaft disposed in an axial direction at a center of the rim;
a motor assembly including a stator surrounding and fixed to the shaft, and a rotor disposed to surround the stator and rotatable about the shaft, wherein the motor assembly is disposed inside the rim to provide a rotational force to the rim;
a ring-shaped magnet rotatable together with the cover;
a magnetic encoder located between the shaft and the cover and connected and fixed to the shaft in the axial direction, wherein the magnetic encoder includes an encoder sensor configured to sense a change in a magnetic flux of the ring-shaped magnet; and
a shielding portion detachably coupled to the cover, wherein the ring-shaped magnet is mounted in the shielding portion in a replaceable manner.

2. The in-wheel motor of claim 1, wherein the encoder sensor is located inside a hollow of the ring-shaped magnet.

3. The in-wheel motor of claim 1, wherein the magnetic encoder further includes an encoder board where the encoder sensor is mounted,
wherein the encoder board is located together with the encoder sensor inside a hollow of the ring-shaped magnet.

4. The in-wheel motor of claim 1, wherein the magnetic encoder further includes:
an encoder board where the encoder sensor is mounted; and
an encoder housing coupled to the encoder board and connecting the encoder board to the shaft in the axial direction,
wherein the encoder housing has one end inserted into a hollow of the shaft by a predetermined length in the axial direction and the other end coupled to the encoder board.

5. The in-wheel motor of claim 1, wherein the magnetic encoder further includes:
an encoder board where the encoder sensor is mounted; and
an encoder housing coupled to the encoder board and connecting the encoder board to the shaft in the axial direction,
wherein the encoder housing includes:
a circular tubular portion-to-be-inserted inserted into a hollow of the shaft in the axial direction;
a connecting portion connected to the portion-to-be-inserted and having an outer diameter greater than an outer diameter of the portion-to-be-inserted; and
a protrusion protruding from the connecting portion toward the outside of the shaft.

6. The in-wheel motor of claim 5, wherein the encoder board has a coupling hole defined therein,
wherein the protrusion is inserted into and extends through the coupling hole to support the encoder board.

7. The in-wheel motor of claim 5, wherein the protrusion includes:
a first protrusion protruding from the connecting portion; and
a second protrusion protruding from the first protrusion and having a smaller diameter than the first protrusion,
wherein the coupling hole has a size allowing only the second protrusion to be inserted.

8. The in-wheel motor of claim 1, wherein a length of a hollow of the ring-shaped magnet is greater than a thickness of the encoder sensor.

9. The in-wheel motor of claim 1, wherein the magnetic encoder further includes an encoder board where the encoder sensor is mounted,
wherein a length of a hollow of the ring-shaped magnet is greater than a sum of a thickness of the encoder board and a thickness of the encoder sensor.

10. The in-wheel motor of claim 1, wherein the shielding portion is made of a magnetic material.

11. The in-wheel motor of claim 1, wherein the cover includes:
an outer cover detachably coupled to the rim by covering an outer open area of the rim; and
an inner cover detachably coupled to the rim by covering an inner open area of the rim,
wherein the outer cover has a screw hole extending therethrough in the axial direction of the shaft,
wherein the shielding portion is detachable from the outer cover by being fastened to or released from the screw hole.

12. The in-wheel motor of claim 11, wherein the shielding portion includes:
a plate-shaped head protruding outwardly of an outer surface of the outer cover and configured to rotate the shielding portion when the shielding portion is fastened or released; and
a screw connected to the head and fastened into the screw hole.

13. The in-wheel motor of claim 12, wherein the screw has a groove with a circular cross-section recessed in the axial direction of the shaft,
wherein the ring-shaped magnet is inserted into and fixed to the groove.

14. The in-wheel motor of claim 12, wherein the screw has a groove with a circular cross-section recessed in the axial direction of the shaft,
wherein the groove includes:
a first groove located at a front end in a protruding direction of the screw, wherein the ring-shaped magnet is inserted into and fixed to the first groove; and
a second groove located at a rear end in the protruding direction of the screw and securing a space of a smaller size than the first groove to define a clearance space between the ring-shaped magnet and the shielding portion.

15. The in-wheel motor of claim 11, further comprising an O-ring disposed in a contact area between an outer surface of the outer cover and the shielding portion,
wherein the O-ring is inserted into and fixed to an O-ring receiving groove defined in the outer surface of the outer cover in contact with the shielding portion.

16. An in-wheel motor comprising:
a circular rim with both sides open;
a cover coupled to the rim to cover open areas at the both sides of the rim and sealing the interior of the rim;
a shaft disposed in an axial direction at a center of the rim;
a motor assembly including a stator surrounding and fixed to the shaft, and a rotor disposed to surround the stator and rotatable about the shaft, wherein the motor assembly is disposed inside the rim to provide a rotational force to the rim;
a ring-shaped magnet rotatable together with the cover; and
a magnetic encoder located between the shaft and the cover and connected and fixed to the shaft in the axial direction, wherein the magnetic encoder includes an encoder sensor configured to sense a change in a magnetic flux of the ring-shaped magnet,
wherein the encoder sensor is located inside a hollow of the ring-shaped magnet.

17. The in-wheel motor of claim 16, further comprising a shielding portion detachably coupled to the cover, wherein the ring-shaped magnet is mounted in the shielding portion in a replaceable manner.

18. The in-wheel motor of claim 17, wherein the cover includes:
an outer cover detachably coupled to the rim by covering an outer open area of the rim; and
an inner cover detachably coupled to the rim by covering an inner open area of the rim,
wherein the outer cover has a screw hole extending therethrough in the axial direction of the shaft,
wherein the shielding portion is detachable from the outer cover by being inserted into and fastened to or released from the screw hole.

19. The in-wheel motor of claim 18, wherein the shielding portion includes:
a plate-shaped head protruding outwardly of an outer surface of the outer cover and configured to rotate the shielding portion when the shielding portion is fastened or released; and
a screw connected to the head and inserted into and fastened to the screw hole.

20. The in-wheel motor of claim 18, wherein the screw has a groove with a circular cross-section recessed in the axial direction of the shaft, wherein the groove includes:
a first groove located at a front end in a protruding direction of the screw, wherein the ring-shaped magnet is mounted in the first groove in a replaceable manner; and
a second groove located at a rear end in the protruding direction of the screw and securing a space of a smaller size than the first groove to define a clearance space between the ring-shaped magnet and the shielding portion.
